(19) **Europäisches Patentamt**
**European Patent Office**
**Office européen des brevets**

(11) **EP 1 572 511 B1**

(12) **EUROPÄISCHE PATENTSCHRIFT**

(45) Veröffentlichungstag und Bekanntmachung des Hinweises auf die Patenterteilung:
**15.09.2010 Patentblatt 2010/37**

(21) Anmeldenummer: **03789110.8**

(22) Anmeldetag: **02.12.2003**

(51) Int Cl.:
**B60T 8/00** (2006.01)       **B60T 13/74** (2006.01)
**B60T 7/10** (2006.01)

(86) Internationale Anmeldenummer:
**PCT/EP2003/013528**

(87) Internationale Veröffentlichungsnummer:
**WO 2004/054862 (01.07.2004 Gazette 2004/27)**

(54) **VERFAHREN FÜR EINE ADAPTIVE BREMSMOMENTREGELUNG**

ADAPTIVE BRAKING MOMENT CONTROL METHOD

PROCEDE DE REGLAGE ADAPTATIF DU MOMENT DE FREINAGE

(84) Benannte Vertragsstaaten:
**AT BE BG CH CY CZ DE DK EE ES FI FR GB GR IE IT LI LU MC NL PT SE SK TR**

(30) Priorität: **13.12.2002 DE 10258647**

(43) Veröffentlichungstag der Anmeldung:
**14.09.2005 Patentblatt 2005/37**

(73) Patentinhaber: **Continental Teves AG & Co. oHG 60488 Frankfurt (DE)**

(72) Erfinder:
• **GIERS, Bernhard**
  **60320 Frankfurt (DE)**
• **KLUSEMANN, Rainer**
  **60529 Frankfurt/Main (DE)**
• **PRÖGER, Thomas**
  **63322 Rödermark (DE)**

(56) Entgegenhaltungen:
| | |
|---|---|
| **EP-A- 0 976 634** | **DE-A- 10 142 584** |
| **DE-A- 19 942 533** | **FR-A- 2 830 826** |
| **US-A1- 2001 023 799** | **US-A1- 2002 113 488** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 572 511 B1

**Beschreibung**

Die Erfindung betrifft ein Verfahren gemäß Oberbegriff von Anspruch 1 sowie eine Feststellbremse gemäß Oberbegriff von Anspruch 7.

Heute übliche Kraftfahrzeugbremsanlagen haben auf Grund der gesetzlichen Bestimmungen im Wesentlichen drei Funktionen zu erfüllen, nämlich Betriebs-, Feststell- und Hilfs-/Notbremsfunktion. Dazu weisen die bekannten Bremssysteme in der Regel zwei voneinander unabhängige Bremsanlagen auf. Die Betriebsbremse wird im häufigsten Fall durch Betätigung eines Bremspedals aktiviert und weist bereits vielfach elektrohydraulische Hilfsmittel auf, welche beispielsweise das Blockieren der Fahrzeugräder verhindern. Des weiteren besitzen heutige Kraftfahrzeuge eine weitere, vollkommen unabhängige Feststellbremsanlage, welche vielfach durch einen Handbremshebel mit einem Seilzug, welcher mechanisch auf die Bremsaktuatoren der Hinterachse zuspannend einwirkt, betätigt wird. Die Feststellbremsanlage soll dabei auch während der Fahrt funktionsfähig sein, damit bei einem Defekt der Betriebsmittelbremse das Fahrzeug noch zum Stillstand gebracht werden kann.

Aus der DE-A-195 16 639 ist eine Betriebs- und Feststellbremsanlage für Kraftfahrzeuge bekannt, bei der unabhängige Betätigungseinrichtungen zur Betätigung der entsprechenden Bremse vorgesehen sind. Die Bremsanlage umfasst ein mit Fremdenergie gespeistes Druckaufbaumittel, mit dem die Reibungsbremse der Feststellbremsanlage betätigt werden kann. Obwohl die Betätigungseinrichtung ein Element einer Fahrdynamikregelungseinrichtung (ESP) sein kann, ist für die Feststellbremsanlage keine Antiblockierfunktion vorgesehen. Auch aus der WO 99/38738 ist ein Kraftfahrzeugbremssystem mit einer Betriebsbremse und einer elektrisch steuerbaren Feststellbremse bekannt, wobei die dosierbare Betriebsbremsanlage mit ABS-, ASR- und ESP-Funktion ausgestattet ist. Die Feststellbremsanlage ist so ausgelegt, dass bei Betätigung der Feststellbremsanlage bei Fahrgeschwindigkeiten von $v \neq 0$ die Betriebsbremse angesteuert wird. Erst bei Fahrgeschwindigkeiten $v \approx 0$ wird die Feststellbremse zugespannt. Auch bei dieser bekannten elektronischen Feststellbremse ist keine Antiblockierfunktion für die Feststellbremse vorgesehen.

Aus der DE-A-199 08 062 geht eine Feststellbremsanlage für Kraftfahrzeuge hervor, bei der die elektronische Feststellbremse oberhalb einer festgelegten Fahrgeschwindigkeit gesperrt wird. Eine Sperrung ist erforderlich, damit das Kraftfahrzeug bei einem Zuspannen der Aktuatoren der Feststellbremse nicht durch Blockieren der Hinterräder in einen unkontrollierten Fahrzustand gerät.

Die DE 101 42 584 offenbart eine Feststellbremsanlage und ein Verfahren der eingangs genannten Gattung. Dabei sieht die vorbekannte Feststellbremsanlage vor, eine Antiblockiersteuerung gemeinsam auf Grundlage eines Schlupfzustands jenes Rads von einem rechten und einem linken Rad steuert, das eine größere Änderung eines Raddrehzustands zeigt.

Aus der US 2001/0023799 A1 ist eine Feststellbremsanlage mit zwei Steuereinheiten zum Aktivieren von Bremsmitteln der Feststellbremsanlage und der Betriebsbremsanlage bekannt. Durch die zweite Steuereinheit können Funktionen wie eine elektrische Differentialsperre oder ein elektrisches Stabilitätsprogramm gesteuert werden.

Außerdem offenbart die GB 2 321 683 A ein Verfahren zur Betätigung einer elektrisch ansteuerbaren Bremse, wobei bei einer Fahrgeschwindigkeit, welche eine vorgegebene Mindestgeschwindigkeit übersteigt, das Bremsmoment an den abgebremsten Rädern reduziert wird. Dabei wird der Radschlupf zum Ermitteln des reduzierten Bremsmoments betrachtet.

Die vorliegende Erfindung setzt sich zum Ziel, eine elektrisch ansteuerbare Feststellbremsanlage zu schaffen, welche auch bei Fahrgeschwindigkeiten $v \neq 0$ betriebssicher ist.

Diese Aufgabe wird gelöst durch das Verfahren gemäß Anspruch 1 und die Feststellbremse gemäß Anspruch 7.

Grundgedanke der Erfindung ist es, während einer Antiblockierregelung mit einem möglichst einfach gehaltenen Verfahren einen für eine hohe Bremswirkung günstigen Arbeitspunkt auf der $\mu$-Schlupf Kurve zu finden.

Der Zweck des Verfahrens ist eine Vermeidung eines zu hohen Bremsmomentes um ein Blockieren der Räder bei einer dynamischen Abbremsung zu verhindern.

Gemäß der Erfindung wird zur Berechnung eines neuen Sollwertes eine Bewertung des maximalen Radschlupfverhaltens in einer vorhergehenden instabilen Phase (Release-Phase) vorgenommen.

Dabei wird insbesondere in Abhängigkeit des maximalen Radschlupfes in der vorhergegangen instabilen Phase die Bremsmomentanforderung (ForceRequest) in der nachfolgenden Bremsphase verringert.

Im Verfahren nach der Erfindung ist wird bevorzugt das Rad mit dem größten Radschlupf in den jeweiligen instabilen Phasen zur Bestimmung der Höhe der Bremsmomentanforderung analog dem an sich bekannten Prinzip des "Select-Low" bei ABS-Betriebsbremsen herangezogen.

Es ist zweckmäßig, dass dabei betrachtet wird, ob der Radschlupf (*SlipPH2max*) eine bestimmten Schlupfschwelle (*SlipThr*) an einem Rad überschreitet. Hierdurch lässt sich vorteilhaft die Spannkraftanforderung für die nächste Bremsphase verringern. Die dabei anzuwendende Schlupfschwelle *SlipThr* beträgt insbesondere etwa 30% bis 50% von 1.

Die Berechnung eines neuen Sollwertes (*ForceRequest*) erfolgt insbesondere nach folgender Formel:

$$ForceRequest(n) = ForceRequest(n-1) -$$

$$(ForceRequest(n-1) * SlipPH2max * \frac{Faktor1}{Faktor2})$$

Dabei sind die Faktoren *Faktor1* und *Faktor2* Proportionalitätskonstanten, mit denen fachmännisch eine individuelle Anpassung der Reglung auf die Bedingungen im Fahrzeug (z.B. Auslegung der Feststellbremse) vorgenommen werden kann. Das Verhältnis *Faktor1/Faktor2* ist bevorzugt kleiner als 1. Besonders bevorzugt ist der Verhältniswert kleiner als etwa 0,4, beispielsweise etwa 0,33.

Der Index n gibt den aktuell zu berechnenden Wert für den *ForceRequest* an. Der Index *n-1* bezeichnet den bei einer vorhergehenden Berechnung ermittelten Wert.

Nach einer besonders bevorzugten Ausführungsform wird der neue Sollwert *ForceRequest(n)* für die nächste Bremsphase in der Weise berechnet, dass der Initialisierungswert der Spannkraftanforderung *ForceRequest (n-1)* der aktuelle Wert des tatsächlichen Bremsmomentes zum Zeitpunkt der Erkennung eine Instabilität des Rades ist. Der Zeitpunkt der Instabilität wird insbesondere durch Betrachtung des Zeitpunkts des Überschreitens einer vorgegebenen Schlupfschwelle bestimmt. Steht ein Wert für das tatsächliche Bremsmoment nicht direkt, also sensorisch gemessen, zur Verfügung, ist es sinnvoll, einen entsprechenden Wert über ein fachmännisch ableitbares physikalisches Modell zu berechnen.

Um Unterbremsungen, also im Verhältnis zum aktuellen Reibwert zu geringe Bremsdrücke, zu vermeiden ist es gemäß dem Verfahren der Erfindung bevorzugt, nach einer bestimmten Zeitdauer, wenn die Räder in der Nähe der Fahrzeugreferenzgeschwindigkeit verbleiben, das Bremsmoment mit einem geringeren Bremsmomentgradienten insbesondere schrittweise zu erhöhen. Diese Zeitdauer ist zweckmäßigerweise so zu wählen, dass die Reaktionstotzeiten des kompletten Systems, elektromotorischer Aktor, Trägheiten der Räder, usw. eine berücksichtigt sind. Das heißt, der Bremsmomentengradient sollte zwar möglichst groß sein, jedoch nicht so groß, dass das Bremssystem nicht mehr hinreichend auf die Änderung der Spannkraftanforderung reagieren kann.

Das Bremsmoment wird vorzugsweis mit Hilfe der Zuspannkraft oder über Messung des Weges eines bewegten Elementes an einer mechanischen Zuspanneinrichtung gemessen.

Das Verfahren der Erfindung bietet den Vorteil, dass ein Blockieren der Räder bzw. ein Übersteuern der Spannkraft bei einer während der Fahrt betätigten Feststellbremse vermieden werden kann.

Weitere bevorzugte Ausführungsformen ergeben sich aus den Unteransprüchen und der nachfolgenden Beschreibung eines Ausführungsbeispiels an Hand von Figuren.

Es zeigen

Fig. 1    ein Diagramm zur Erläuterung des erfindungsgemäßen Verfahrens mit einer einfachen Blockierregelung und

Fig. 2    ein weiteres Diagramm zur Erläuterung eines erfin- dungsgemäß erweiterten Verfahrens mit einer Blok- kierregelung, welche zurückliegende Bremsmomente berücksichtigt.

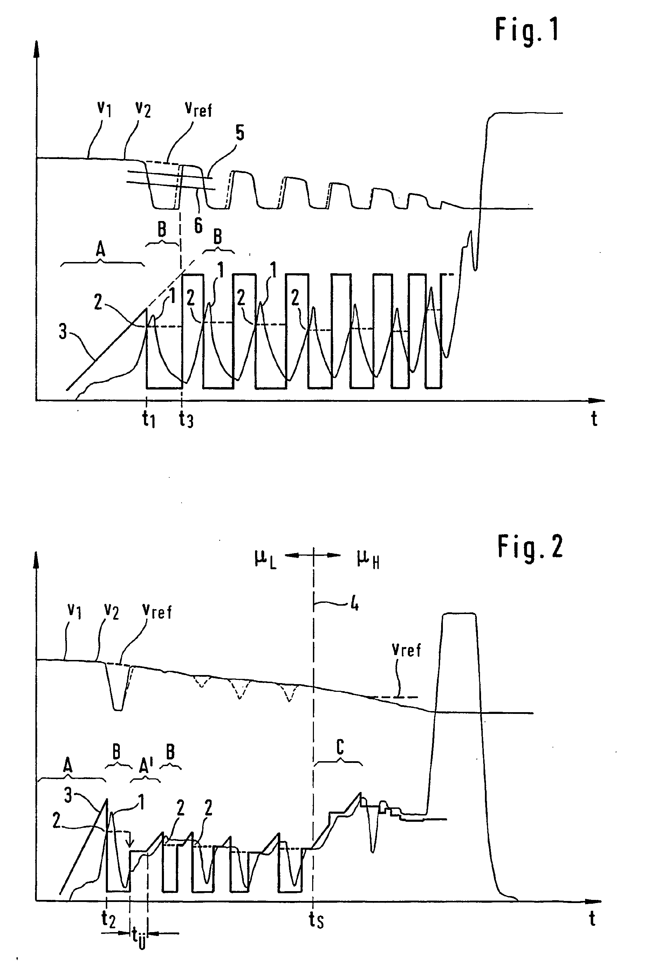

In den Diagrammen der Figuren 1 und 2 geben die beiden im oberen Bereich der Ordinate verlaufenden Kurven $v_1$ und $v_2$ die mit üblichen ABS-Raddrehzahlsensoren gemessenen Radgeschwindigkeiten der Hinterräder an. Die im unteren Teil der Ordinate verlaufende Kurve 1 in den Figuren 1 und 2 gibt die aktuelle Kraft an den Aktuatoren der Feststellbremse an.

Die gestrichelten Linien 2 in den Figuren 1 und 2 geben jeweils einen gespeicherten Wert für den Sollwert des Bremsmoments *ForceRequest (n-1)* in der aktuellen Bremsphase an.

In Fig. 1 steigt in Bereich A zunächst der Sollwert für das Bremsmoment solange an, bis eine obere Schlupfschwelle 5 *SlipPH2max* durch die Radgeschwindigkeiten ($v_1$, $v_2$) überschritten wird. In Phase B (Release Phase) wird der Sollwert für das Bremsmoment verringert, so dass die Radgeschwindigkeit nach einer gewissen Reaktionszeit des Gesamtsystems wieder ansteigt. Der Sollwert für die nächste Bremsphase wird bestimmt durch Verwendung des aktuell zur Zeit $t_1$ ermittelten Bremsmoments (Kurve 1). Wenn die untere Schlupfschwelle 6 *SlipPH1max* dabei unterschritten wird (Zeitpunkt $t_3$), wird das Bremsmoment durch Verwendung des neuen Sollwerts *ForceRequest(n)* wieder erhöht.

In Fig. 2 steigt ebenfalls in Bereich A zunächst der Sollwert für das Bremsmoment solange an, bis eine Schlupfschwelle von 40 % durch die Radgeschwindigkeiten ($v_1$, $v_2$) überschritten wird. In diesem Moment wird der Sollwert *ForceRequest* (Kurve 2, Zeitpunkt $t_2$) deutlich verringert und der aktuelle Wert des aktuellen Bremsmoments auf Kurve 1 in einem Speicher festgehalten. Nach dem Ansteigen der Radgeschwindigkeiten wird erneut das Bremsmoment erhöht, wobei der neue Sollwert entsprechend der weiter oben angegebenen Formel aus dem Bremsmoment der vorhergehenden Phase *(ForceRequest (n-1)* und einem Faktor berechnet wird.

Zum Zeitpunkt $t_s$ (gestrichelte Linie 4) wird zur weiteren Erläuterung der Wirkungsweise des Verfahrens ein Reibwertsprung von einem vergleichsweise niedrigen Reibwert $\mu_L$ (z.B. Schnee oder Eis) auf einen höheren Reibwert $\mu_H$ (z.B. trockene Fahrbahn) herbeigeführt. Zur Vermeidung einer Unterbremsung wird nun in Bereich C der Sollwert *ForceRequest(n)* schrittweise solange erhöht, bis erneut ein vorgegebener Mindestschlupf auftritt.

Entsprechend kann zur Vermeidung von Unterbremsungen in einer Bremsmomenthaltephase A' betrachtet werden, ob der Radschlupf für eine bestimmte Zeit $t_{ü}$ eine weitere vorgegebene Schlupfschwelle nicht überschritten hat. Ist dies der Fall, wird der Sollwert analog dem Verfahren im vorstehenden Absatz schrittweise erhöht.

## Patentansprüche

1. Verfahren zur Betätigung einer elektrisch ansteuerbaren Feststellbremse, wobei bei einer Fahrgeschwindigkeit, welche eine vorgegebene Mindestgeschwindigkeit übersteigt, das Bremsmoment an den abgebremsten Rädern reduziert wird, um ein Blockieren der durch die Feststellbremse abgebremsten Räder zu verhindern, wobei der Radschlupf zum Ermitteln des reduzierten Bremsmoments betrachtet wird und wobei nach Erkennung eines Radschlupfes oberhalb eines vorgegebenen Schwellenwertes das Bremsmoment verringert wird und nach Erkennung eines Radschlupfes unterhalb eines vorgegebenen Schwellenwertes das Bremsmoment erhöht wird, **dadurch gekennzeichnet, dass** zur Berechnung eines neuen Sollwertes für das Bremsmoment der maximale Radschlupf der instabilen Phase (A), in der der Radschlupf um ein bestimmtes Maß unterhalb der Fahrzeuggeschwindigkeit ($v_{ref}$) liegt, betrachtet wird.

2. Verfahren nach Anspruch 1, **dadurch gekennzeichnet, dass** der Radschlupf des durch die Feststellbremse abgebremsten Rades betrachtet wird, welches den momentan höchsten Radschlupf aufweist.

3. Verfahren nach Anspruch 1 oder 2, **dadurch gekennzeichnet, dass** zur Berechnung eines neuen Sollwertes für das Bremsmoment der Sollwert des Bremsmoments der vorangegangenen Berechnung mitberücksichtigt wird.

4. Verfahren nach einem der Ansprüche 1 bis 3, **dadurch gekennzeichnet, dass** zur Berechnung eines neuen Sollwertes für das Bremsmoment das tatsächliche Bremsmoment (2), welches zum Zeitpunkt des Überschreitens der Schlupfschwelle vorliegt, berücksichtigt wird oder eine über ein Näherungsmodell abgeleitete Größe, die weitestgehend dem aktuellen Bremsmoment (2) entspricht.

5. Verfahren nach einem der Ansprüche 1 bis 4, **dadurch gekennzeichnet, dass** zur Vermeidung von Unterbremsungen betrachtet wird, ob der Radschlupf für eine bestimmte Zeit $t_{ü}$ eine weitere vorgegebene Schlupfschwelle nicht überschritten hat.

6. Verfahren nach einem der Ansprüche 1 bis 5, **dadurch gekennzeichnet, dass** bei einer Unterbremsung das Bremsmoment schrittweise erhöht wird.

7. Elektrisch ansteuerbare Feststellbremse für Kraftfahrzeuge, welche ein weiteres elektronisches Betriebsbremssystem mit Blockierschutz umfasst, wobei die Feststellbremse eine Einrichtung zur Blockierverhinderung aufweist, **dadurch gekennzeichnet, dass** die Einrichtung Mittel aufweist, die das Verfahren nach mindestens einem der Ansprüche 1 bis 6 verwenden.

## Claims

1. Method for activating an electrically actuable parking brake, wherein at a velocity which exceeds a predefined minimum velocity the braking torque at the braked wheels is reduced in order to prevent locking of the wheels which are braked by the parking brake, wherein the wheel slip is considered for the determination of the reduced braking torque, and wherein the braking torque is reduced after a wheel slip above a predefined threshold value has been detected, and the braking torque is increased after a wheel slip below a predefined threshold value has been detected, **characterized in that** the maximum wheel slip of the unstable phase (A) in which the wheel slip is below the vehicle velocity ($v_{ref}$) by a certain amount is considered for the calculation of a new setpoint value for the braking torque.

**2.** Method according to Claim 1, **characterized in that** the wheel slip of that wheel which is braked by the parking brake and which has the currently greatest wheel slip is considered.

**3.** Method according to Claim 1 or 2, **characterized in that** the setpoint value of the braking torque of the preceding calculation is also taken into account for the calculation of a new setpoint value for the braking torque.

**4.** Method according to one of Claims 1 to 3, **characterized in that** the actual braking torque (2) which is present at the time when the slip threshold is exceeded is taken into account for the calculation of a new setpoint value for the braking torque, or a variable which is derived by means of a proximation model and which corresponds largely to the current braking torque (2) is taken into account.

**5.** Method according to one of Claims 1 to 4, **characterized in that** in order to avoid underbraking, it is considered whether the wheel slip has not exceeded a further predefined ship threshold for a specific time $t_{\ddot{u}}$.

**6.** Method according to one of Claims 1 to 5, **characterized in that** in the case of underbraking the braking torque is increased incrementally.

**7.** Electrically actuable parking brake for motor vehicles, which comprises a further electronic service brake system with an anti-lock protection, wherein the parking brake has a device for preventing locking, **characterized in that** the device has means which use the method according to at least one of Claims 1 to 6.

## Revendications

**1.** Procédé d'actionnement d'un frein de stationnement à commande électrique, selon lequel, en présence d'une vitesse de déplacement qui dépasse une vitesse minimale prédéfinie, le moment de freinage appliqué sur les roues freinées est réduit pour éviter un blocage des roues freinées par le frein de stationnement, le patinage de roue étant pris en compte pour déterminer le moment de freinage réduit et le moment de freinage étant réduit après avoir détecté un patinage de roue au-dessus d'une valeur de seuil prédéfinie et le moment de freinage étant augmenté après avoir détecté un patinage de roue au-dessous d'une valeur de seuil prédéfinie, **caractérisé en ce que** le patinage de roue maximum de la phase instable (A) dans laquelle le patinage de roue se trouve à un niveau donné au-dessous de la vitesse du véhicule ($v_{ref}$) est pris en compte pour le calcul d'une nouvelle valeur de consigne pour le moment de freinage.

**2.** Procédé selon la revendication 1, **caractérisé en ce que** le patinage de roue pris en compte est celui de la roue freinée par le frein de stationnement qui présente momentanément le patinage de roue le plus élevé.

**3.** Procédé selon la revendication 1 ou 2, **caractérisé en ce que** la valeur de consigne du moment de freinage du calcul précédent est également prise en compte pour calculer une nouvelle valeur de consigne pour le moment de freinage.

**4.** Procédé selon l'une des revendications 1 à 3, **caractérisé en ce que** le moment de freinage réel (2) qui est présent au moment du dépassement du seuil de patinage est pris en compte pour calculer une nouvelle valeur de consigne pour le moment de freinage, ou alors une grandeur dérivée par le biais d'un modèle d'approximation, laquelle correspond pour l'essentiel au moment de freinage actuel (2).

**5.** Procédé selon l'une des revendications 1 à 4, **caractérisé en ce que** pour éviter les freinages insuffisants, on observe si le patinage de roue n'a pas dépassé un autre seuil de patinage prédéfini pendant une durée $t_{\ddot{u}}$ donnée.

**6.** Procédé selon l'une des revendications 1 à 5, **caractérisé en ce qu'**en cas de freinage insuffisant, le moment de freinage est augmenté par paliers.

**7.** Frein de stationnement à commande électrique pour véhicules automobiles, lequel présente un système de freinage de service électronique supplémentaire avec protection antiblocage, le frein de stationnement présentant un dispositif pour empêcher le blocage, **caractérisé en ce que** le dispositif présente des moyens qui utilisent le procédé selon au moins l'une des revendications 1 à 6.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19516639 A
- WO 9938738 A
- DE 19908062 A
- DE 10142584
- US 20010023799 A1
- GB 2321683 A